# EUROPEAN PATENT APPLICATION

(11) **EP 2 202 889 A2**
(43) Date of publication of application: **30.06.2010**
(21) Application number: 09178760.6
(22) Date of filing: 10.12.2009
(51) Int. Cl.: H04B 1/40

(54) **Interface circuit and data receiving method**

(30) Priority: 25.12.2008 JP 2008329233
(71) Applicant: FUJITSU LIMITED, Kawasaki-shi, Kanagawa 211-8588 (JP)
(72) Inventor: Nibe, Keiji, Kawasaki-shi Kanagawa 211-8588 (JP)
(74) Representative: Fenlon, Christine Lesley

(57) **Abstract**

An interface circuit for use in a baseband module, and receiving data from a radio frequency module intermittently, the data including a synchronization pattern followed by a payload data, the interface circuit includes: a receiver for receiving data transmitted from the radio frequency module; a timer for indicating estimated time intervals of intermittently transmitted data from the radio frequency module; and a processor for controlling detection of the synchronization pattern in portions of the received data included in a time window designated by the time intervals estimated by the timer, the processor validating detection of the synchronization pattern when at least a part of the data within the time window matches with a predetermined pattern and validating the payload data following the validated synchronization pattern.

## Description

### FIELD

A certain aspect of the embodiments discussed herein relates to an interface circuit for use in a base band module.

### BACKGROUND

In conventional wireless communication devices such as cellular phones having an RF (Radio Frequency) unit and a baseband processing unit, an interface unit that connects the RF unit and the baseband processing unit has a configuration including analog signal lines and digital control lines and/or analog control lines.

In recent years, an RF-IC (Radio Frequency-Integrated Circuit) has been formed using the CMOS (Complementary Metal-Oxide Semiconductor) technique, which enables an ADC (Analog-to-Digital Converter) or DAC (Digital-to-Analog Converter) to be included within the RF-IC as a built-in component.

As a result, a digital interface standard for connecting an RF-IC and a digital IC, which is the so-called DigRF standard, has been established.

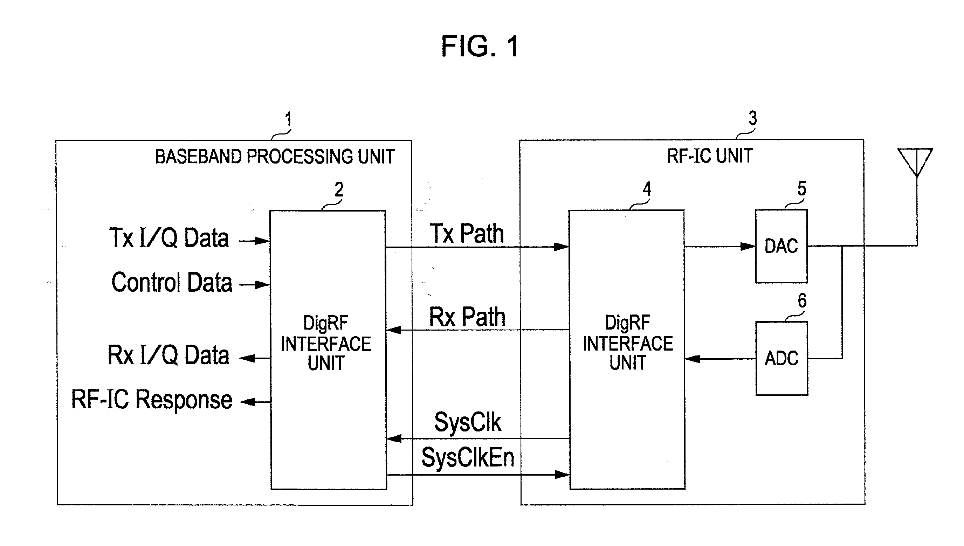

The DigRFv3 (version 3) standard has a communication configuration as illustrated in FIG. 1. A DigRF interface unit 2 of a baseband processing unit 1 processes the respective data of the transmission IQ data Tx_I/Q_Data, the control data Control_Data, the reception IQ data Rx_I/Q_Data, and the response RF-IC_Response, so as to convert these data into LVDS (Low Voltage Differential Signaling) signals for a transmission path Tx_Path and a reception path Rx_Path, thereby providing transmission/reception of IQ data or control data to/from an RF-IC unit 3.

Furthermore, a DigRF interface unit 4 of the RF-IC unit 3 performs interface processing which interfaces the LVDS signals transmitted via the transmission path Tx_Path and the reception path Rx_Path, with a DAC 5 and ADC 6.

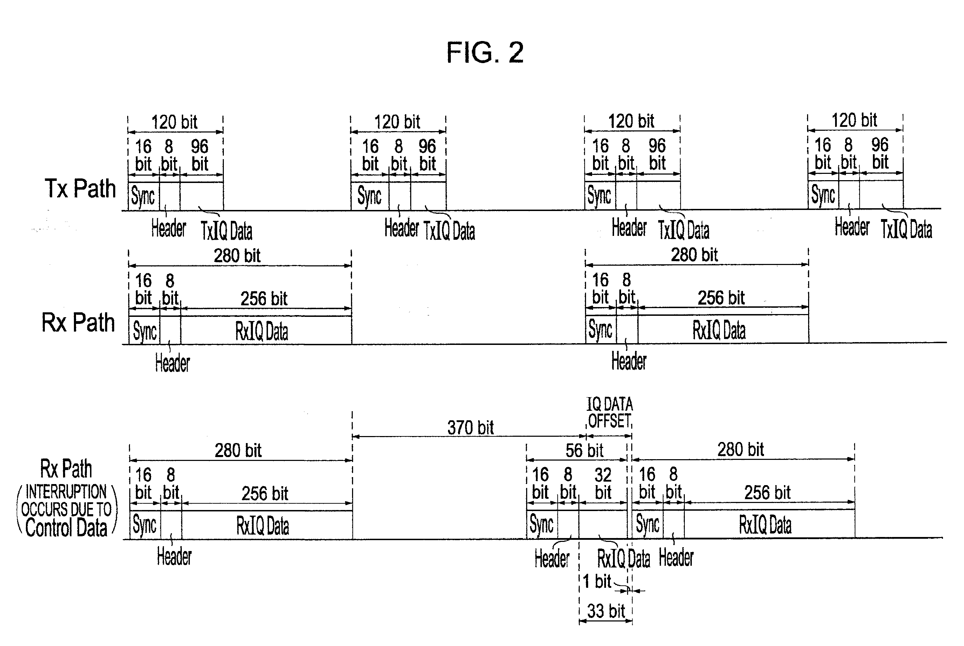

FIG. 2 illustrates a communication format of the transmission path Tx_path and the reception path Rx_Path. The transmission path Tx_Path and the reception path Rx_Path are each configured of a 16-bit synchronization pattern Sync, an 8-bit header "Header" which is a notice of the data type, and an 8-bit to 512-bit payload. The Tx_I/Q_Data has a 96-bit payload "Payload", and the Rx_I/Q_Data has a 256-bit payload "Payload", as stipulated in the DigRFv3.

Furthermore, the DigRF interface units 2 and 4 transmit control data, in addition to the IQ data. The format of the control data is the same as that of the IQ data. It is noted that the bit length of the payload "Payload" is variable.

Furthermore, the IQ data is transmitted via the reception path (or transmission path) at constant intervals (e.g., at intervals equivalent to 370 bits). However, in a case in which the transmission of the control data interrupts the transmission timing for the IQ data, the IQ data is transmitted after waiting the equivalent of 1 bit after the transmission of the control data is complete.

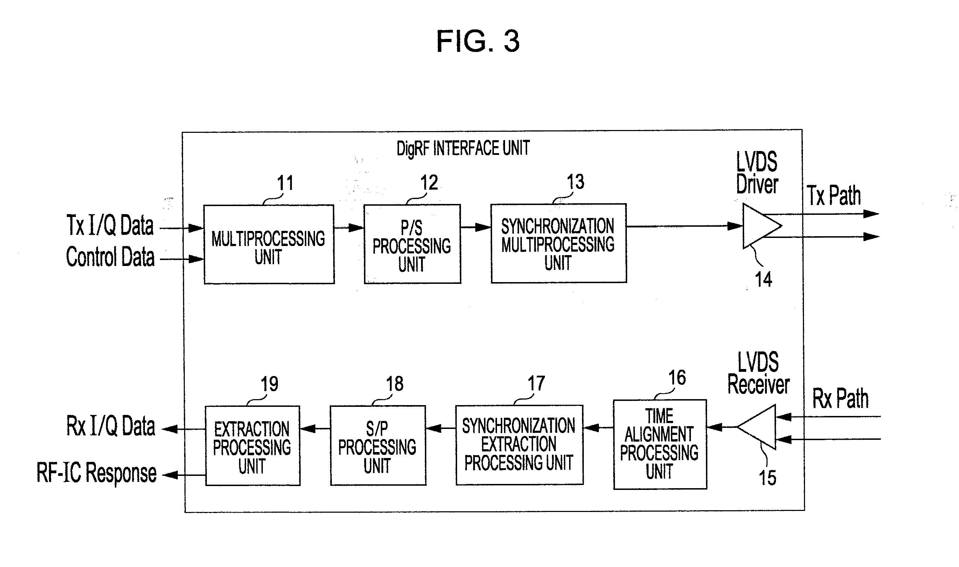

FIG. 3 is a block diagram which illustrates an example of conventional DigRF interface units. In this drawing, a multiprocessing unit 11 performs multiprocessing for the transmission IQ data Tx_I/Q_Data and the control data Control_Data as the transmission path processing.

A P/S processing unit 12 serializes the data thus subjected to the multiprocessing. A synchronization multiprocessing unit 13 performs processing for adding a synchronization pattern Sync. An LVDS driver 14 performs processing for converting the transmission data into an LVDS signal.

As the processing for the reception path signal, an LVDS receiver 15 receives the LVDS signal, and converts the LVDS signal thus received into a single format received signal. A time alignment processing unit 16 performs sampling processing for the received signal. A synchronization extraction processing unit 17 detects the synchronization pattern Sync by making a comparison and detecting a match between the received signal thus subjected to the sampling processing and a synchronization pattern stipulated in the DigRF standard, and supplies the signal received after the synchronization pattern Sync to an S/P processing unit 18.

The S/P processing unit 18 converts the data into parallel data. An extraction processing unit 19 divides the payload "Payload" into reception IQ data Rx_I/Q_Data and response data RF-IC_Response by analyzing the header "Header", and outputs the data thus divided.

Furthermore, a technique has been proposed for a wireless communication system in which, in a case in which the wireless communication system fails in detecting the synchronization signal (synchronization pattern), the wireless communication system detects the current signal assuming that the synchronization signal has been input at the same input timing as that of the previous synchronization signal, and in a case in which the signal detection succeeds, the demodulation (reproduction) processing is performed (e.g., see Patent document 1).
[Patent Document 1] Japanese Laid-open Patent Publication No. 2006-41807

### SUMMARY

Accordingly, it is desirable to provide an interface circuit to prevent reception data from being discarded even if an error occurs in the synchronization pattern of a received signal.

According to an aspect of an embodiment, an interface circuit for use in a baseband module, and receiving data from a radio frequency module intermittently, the data including a synchronization pattern followed by a payload data, the interface circuit includes: a receiver for receiving data transmitted from the radio frequency module; a timer for indicating estimated time intervals of intermittently transmitted data from the radio frequency module; and a processor for controlling detection of the synchronization pattern in portions of the received data included in a time window designated by the time intervals estimated by the timer, the processor validating detection of the synchronization pattern when at least a part of the data within the time window matches with a predetermined pattern and validating the payload data following the validated synchronization pattern.

### BRIEF DESCRIPTION OF DRAWINGS

FIG. 1 is a diagram for describing the DigRF standard.

FIG. 2 is a diagram which illustrates the communication format of IQ data.

FIG. 3 is a block diagram which illustrates an example of conventional DigRF interface units.

FIG. 4 is a block diagram which illustrates a DigRF interface according to a first embodiment.

FIGs. 5A to 5D are timing charts for describing control data offset calculation processing.

FIG. 6 is a block diagram which illustrates a DigRF interface unit according to a second embodiment.

FIGs. 7A and 7B are diagrams for describing header correction.

### DESCRIPTION OF EMBODIMENTS

Description will be made below regarding an embodiment with reference to the drawings.

### [First embodiment]

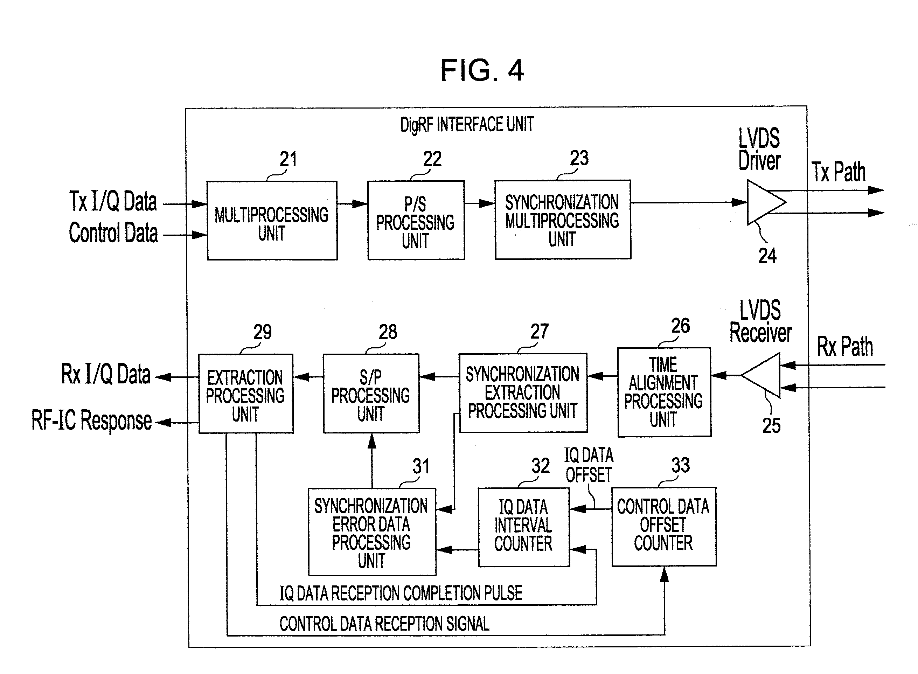

FIG. 4 is a block diagram which illustrates a DigRF interface unit of an interface circuit disclosed in a first embodiment. The DigRF interface unit is used as the DigRF interface unit 2 of the baseband processing unit 1 illustrated in FIG. 1. Furthermore, the DigRF interface unit 4 of the RF-IC unit 3 has the same configuration.

In FIG. 4, as the processing at the transmission path, a multiprocessing unit 21 performs multiprocessing for the transmission IQ data Tx_I/Q_Data, which is the first data, and the control data Control_Data, which is the second data.

A P/S processing unit 22 serializes the data subjected to the multiprocessing. The synchronization multiprocessing unit 23 performs processing for addition of the synchronization pattern Sync. An LVDS driver 24 performs processing for converting the transmission data into an LVDS signal.

As the processing for a reception path signal, an LVDS receiver 25 receives the LVDS signal, and converts the LVDS signal thus received into a received signal in a single format. A time alignment processing unit 26 performs sampling processing for the received signal.

A synchronization extraction processing unit 27 detects the synchronization pattern Sync by making a comparison and detecting a match between the received signal thus subjected to the sampling processing and a synchronization pattern stipulated in the DigRF standard, removes the synchronization pattern Sync from the received signal, and supplies the received signal thus processed to an S/P processing unit 28. The synchronization extraction processing unit 27 detects the synchronization pattern in portions of the received data (the received signal) in accordance with matching the synchronization pattern with the predetermined synchronization pattern. Furthermore, the synchronization extraction processing unit 27 supplies the received signal to a synchronization error data processing unit 31. The S/P processing unit 28 converts the data into parallel data.

An extraction processing unit 29 divides the payload "Payload" into reception IQ data Rx_I/Q_Data and response data RF-IC_Response by analyzing the header "Header", and outputs the data thus divided. It is noted that, in the Header analysis, the payload size or the kind of frame logical channel stored in the header field is extracted.

After completion of reception of the IQ data, the extraction processing unit 29 generates an IQ data reception completion pulse, and supplies the IQ data reception completion pulse thus generated to an IQ data interval counter 32. When the control data is received, the extraction processing unit 29 generates a control data reception pulse, and supplies, to a control data offset counter 33, the control data reception pulse thus generated and the payload size acquired from the header information as the number of bits of the payload of the control data.

In a case in which, due to an error, the received signal does not completely match a predetermined synchronization pattern, the synchronization error data processing unit 31 does not discard the received signal. Instead, the synchronization error data processing unit 31 supplies the received signal to the S/P processing unit 28. The synchronization error data processing unit 31 controls detection of the synchronization pattern in portions of the received signal included in a time window designated by the time estimated by the IQ data interval counter 32, the synchronization error data processing unit 31 validating detection of the synchronization pattern when at least a part of the data within the time window matches with predetermined synchronization pattern and validating the payload data following the validated synchronization pattern. That is to say, when the synchronization error data processing unit 31 receives an instruction from the IQ data interval counter 32 which indicates the reception timing for the next IQ data, in a case in which the received signal does not completely match the predetermined synchronization pattern, and in a case in which the number of unmatched bits is equal to or smaller than a predetermined value (e.g., 1 to 3 bits) in the 16-bit synchronization pattern, the synchronization error data processing unit 31 judges that a synchronization pattern has been detected. In this case, the subsequently received signal is used as normally transmitted data. Furthermore, the synchronization error data processing unit 31 removes the synchronization data from the received data, and supplies the received data thus processed to the S/P processing unit 28. On the other hand, in a case in which the number of unmatched bits exceeds the threshold value, judgment is made that the synchronization pattern has not been detected, and the subsequently received signal is discarded. A notice of the number of unmatched bits is transmitted from the synchronization extraction processing unit 27. Also, the synchronization error data processing unit 31 may perform matching level detection again.

Also, an arrangement may be made in which, when the synchronization error data processing unit 31 receives an instruction which indicates the reception timing for the next IQ data, in a case in which the received signal does not completely match the predetermined synchronization pattern, and in a case in which the number of unmatched bits is equal to or smaller than a predetermined value in the 16-bit synchronization pattern, the positions of the unmatched bits are stored as history information, and the history information is transmitted to a not illustrated higher-order device or the like so as to perform error analysis or the like.

The control data offset counter 33 receives the control data reception pulse and the number of bits of the payload of the control data from the extraction processing unit 29. Furthermore, the number of bits of the payload of the control data is loaded into the control data offset counter 33, and the control data offset counter 33 performs a countdown using a supplied clock signal. Moreover, the control data offset counter 33 supplies the count value to the IQ data interval counter 32 as an offset value. In other words, the control data offset counter 33 indicates offset of the estimated time intervals to the IQ data interval counter 32 in accordance with the number of bits of a payload of the control data, or the data length of the control data as the offset value. The estimated time intervals are intervals of IQ data countered by the IQ data interval counter 32.

The IQ data interval counter 32 receives the IQ data reception completion pulse provided by the extraction processing unit 29. The IQ data interval counter 32 indicates the estimated time intervals of intermittently transmitted data from the RF-IC unit 3. Furthermore, the IQ data interval counter 32 receives the offset value provided by the control data offset counter 33. Upon the provision of the IQ data reception completion pulse, the IQ data interval counter 32 is preset to a predetermined value (= 369), and performs a countdown using a supplied clock signal. Furthermore, in a case in which the IQ data interval counter 32 has received an offset value of 0 or more from the control data offset counter 33 when the count value of the IQ data interval counter 32 reaches zero, the offset value is loaded into the IQ data interval counter 32, and the IQ data interval counter 32 performs a countdown using a supplied clock signal. At the point in time when the count value reaches zero, the IQ data interval counter 32 transmits an instruction which indicates the timing for the next IQ data reception. The IQ data interval counter 32 offsets the estimated time intervals and indicates the offset time intervals of intermittently transmitted data from the RF-IC unit 3.

Also, an arrangement may be made in which the count value of the IQ data interval counter 32 and the count value of the control data offset counter 33 are supplied to the synchronization error data processing unit 31, and, at the point in time when the count value of the IQ data interval counter 32 reaches zero and the count value of the control data offset counter 33 reaches zero, the synchronization error data processing unit 31 transmits an instruction which indicates the timing for the next IQ data reception.

It is noted that the synchronization extraction processing unit 27 corresponds to a disclosed synchronization pattern detection means, and the extraction processing unit 29 corresponds to a disclosed extraction means and a bit number detection means. Furthermore, the IQ data interval counter 32 corresponds to a disclosed first counting means, the control data offset counter 33 corresponds to a disclosed second counting means, and the synchronization error data processing unit 31 corresponds to a disclosed a processor.

### [Control data offset]

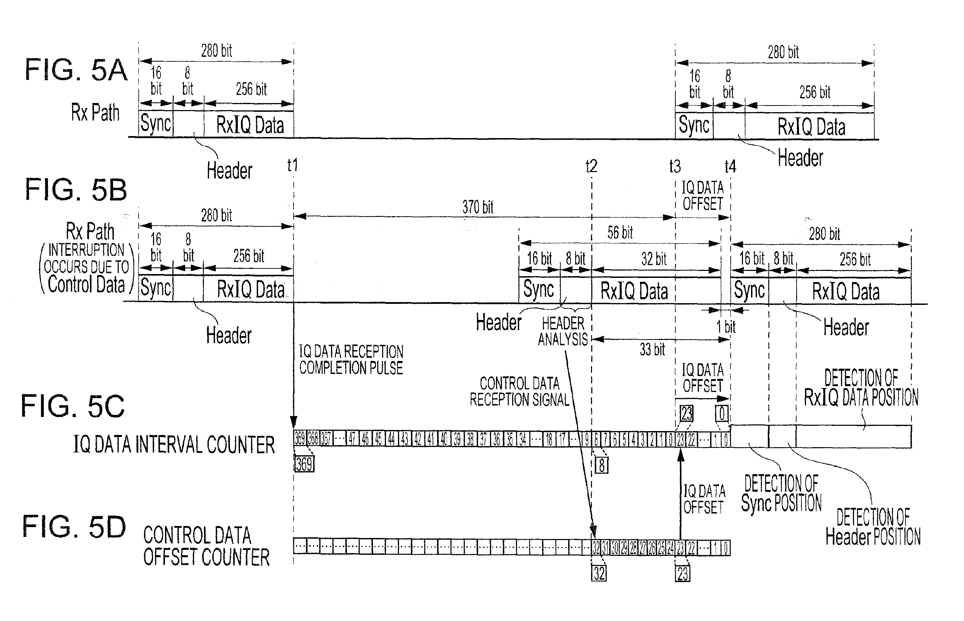

FIGs. 5A to 5D are timing charts for describing control data offset calculation processing. As described in FIG. 5A, the IQ data is transmitted via the reception path at constant intervals (e.g., intervals of 370 bits). It is noted that, in a case in which the transmitted control data interrupts the transmission timing of the IQ data, the IQ data is transmitted after waiting the equivalent of 1 bit after the transmission of the control data is complete, as illustrated in FIG. 5B.

At the point in time t1 when the reception of the previous IQ data has been completed, the IQ data interval counter 32 receives an IQ data reception completion pulse. Upon reception of the IQ data reception completion pulse, the IQ data interval counter 32 is preset to a predetermined value (e.g., 369), and the IQ data interval counter 32 decrements the count value. It is noted that the interval obtained by decrementing the predetermined value (= 369) until it reaches 0 matches the constant interval (equivalent to 370 bits) at which the IQ data is to be transmitted.

As illustrated in FIG. 5B, in a case in which interruption has occurred due to the control data, the data length (32 in an example in the drawing) of the control data is acquired by header analysis, and is loaded into the control data offset counter 33 (point in time t2). Subsequently, the control data offset counter 33 decrements the count value.

As illustrated in FIG. 5C, at the point in time t3 when the count value of the IQ data interval counter 32 reaches zero, the count value (32 in an example illustrated in the drawing) of the control data offset counter 33 illustrated in FIG. 5D is loaded into the IQ data interval counter 32.

Subsequently, the IQ data interval counter 32 starts to decrement the count value again. The point in time t4 when the count value of the IQ data interval counter 32 reaches zero again is the start point in time when the next IQ data is to be received.

As described above, such an arrangement is capable of detecting the start point in time when the next IQ data is to be received. Thus, such an arrangement allows the position of the synchronization pattern Sync, the position of the header "Header", and the position of the payload "Payload" of the IQ data to be identified, thereby allowing the data of the header "Header" and the payload "Payload" of the IQ data to be used as available data even if an error occurs in the synchronization pattern Sync.

As described above, such an arrangement enables the baseband processing unit 1 and the RF-IC unit 3 to communicate with each other without discarding the IQ data and the control data even if a bit error occurs in the synchronization pattern Sync due to noise occurrence or increased ambient temperature. Thus, such an arrangement prevents a communication error from occurring due to a control data error, thereby providing improved throughput.

### [Second embodiment]

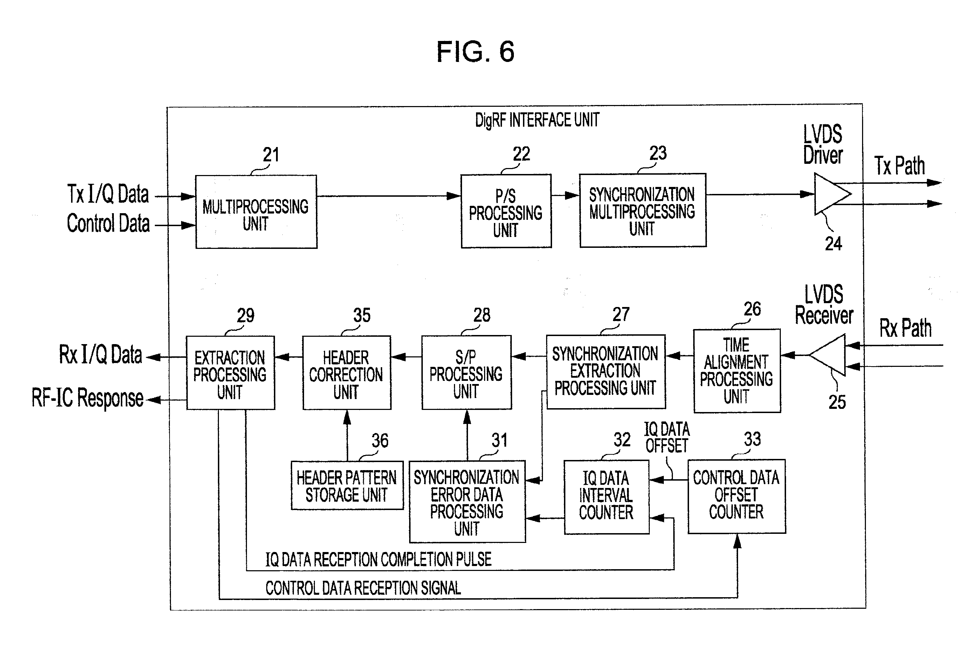

The present embodiment further includes a header correction unit 35 and a header pattern storage unit 36. FIG. 6 is a block diagram which illustrates a DigRF interface unit which is a second embodiment of the disclosed interface circuit. In the drawing, the same components as those illustrated in FIG. 4 are denoted by the same reference numerals.

In FIG. 6, as the processing at the transmission path, the multiprocessing unit 21 performs multiprocessing for the transmission data Tx_I/Q_Data, which is the first data, and the control data Control_Data, which is the second data.

The P/S processing unit 22 serializes the data subjected to the multiprocessing. The synchronization multiprocessing unit 23 performs processing for addition of the synchronization pattern Sync. The LVDS driver 24 performs processing for converting the transmission data into an LVDS signal.

As the processing for a reception path signal, the LVDS receiver 25 receives the LVDS signal, and converts the LVDS signal thus received into a received signal in a single format. The time alignment processing unit 26 performs sampling processing for the received signal.

The synchronization extraction processing unit 27 detects the synchronization pattern Sync by making a comparison and detecting a match between the received signal thus subjected to the sampling processing and a synchronization pattern stipulated in the DigRF standard, removes the synchronization pattern Sync from the received signal, and supplies the received signal thus processed to the S/P processing unit 28. Furthermore, the synchronization extraction processing unit 27 supplies the received signal to the synchronization error data processing unit 31. The S/P processing unit 28 converts the data into parallel data.

The header correction unit 35 makes a comparison so as to detect a match between the signal pattern of the header "Header" of the received signal converted in the form of parallel data and each of candidate header patterns stored in the header pattern storage unit 36. The number of the signal patterns of the header "Header" is a limited number. The header pattern storage unit 36 stores all possible header pattern candidates for the signal pattern of the header "Header".

In a case in which there is no candidate header pattern that completely matches the signal pattern of the header "Header" of the received signal in the comparison/matching-detection step, the header correction unit 35 selects a most similar candidate header pattern, i.e., a header pattern which has a maximum number of bits that match the signal pattern of the header "Header" of the received signal, replaces the signal pattern of the header "Header" of the received signal by the candidate header pattern thus selected, and supplies the header thus replaced to the extraction processing unit 29.

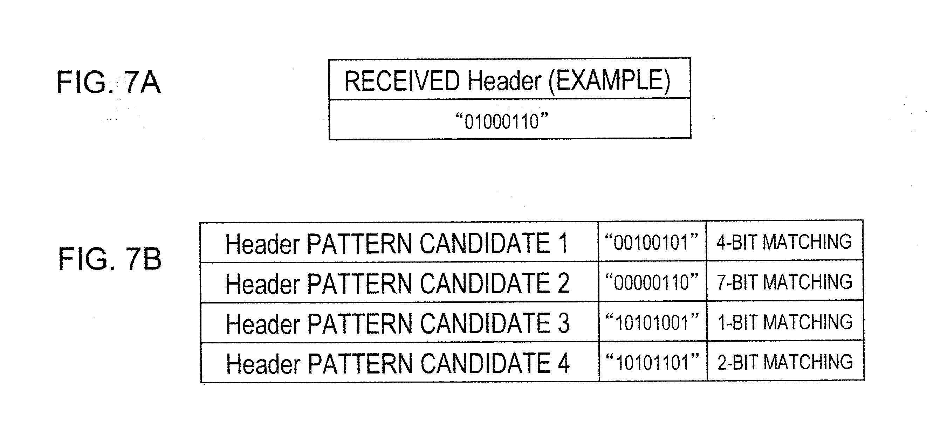

As illustrated in FIG. 7A, let us consider a case in which the signal pattern of the header "Header" of the received signal is "01000110". The header pattern storage unit 36 stores four candidate header patterns "00100101", "00000110", "10101001", and "10101101" illustrated in FIG. 7B. In this case, a four-bit match is detected between the candidate header pattern 1 and the header "Header" of the received signal. A seven-bit match is detected between the candidate header pattern 2 and the header "Header" of the received signal. A one-bit matching is detected between the candidate header pattern 3 and the header "Header" of the received signal. A two-bit matching is detected between the candidate header pattern 4 and the header "Header" of the received signal. Accordingly, the signal pattern of the header "Header" of the received signal is replaced by the candidate header pattern 2 which exhibits the maximum number of matched bits.

As described above, the signal pattern of the header "Header" of the aforementioned received signal is replaced by a candidate header pattern which exhibits the maximum number of matched bits, thereby automatically correcting a signal pattern error which occurs in the header "Header".

The extraction processing unit 29 analyzes the header "Header" converted in the form of parallel data, and performs processing in which the payload "Payload" is divided into reception IQ data Rx_I/Q_Data and response data RF-IC_Response, and the data thus divided is output. It is noted that, in the header analysis, the payload size or the kind of the frame logical channel stored in the header field is extracted.

Furthermore, upon reception of the IQ data, the extraction processing unit 29 generates an IQ data reception completion pulse, and supplies the IQ data reception completion pulse thus generated to the IQ data interval counter 32. When the extraction processing unit 29 receives the control data, the extraction processing unit 29 generates a control data reception pulse, and supplies the control data reception pulse thus generated to the control data offset counter 33, in addition to the payload size acquired from the header information as the number of bits of the payload of the control data.

In a case in which the received signal does not completely match the predetermined synchronization pattern due to an error, the synchronization error data processing unit 31 does not discard the received signal, and supplies the received signal to the S/P processing unit 28. That is to say, when the synchronization error data processing unit 31 receives, from the IQ data interval counter 32, an instruction which indicates the reception timing for the next IQ data, in a case in which the received signal does not completely match the predetermined synchronization pattern, and in a case in which the number of unmatched bits is equal to or smaller than a threshold value (e.g., 1 to 3 bits) in the 16-bit synchronization pattern, the synchronization error data processing unit 31 judges that the synchronization pattern has been detected, and uses the subsequently received signal as the normally received data. In this case, the synchronization error data processing unit 31 removes the synchronization pattern from the received data, and supplies the received data thus processed to the S/P processing unit 28. On the other hand, in a case in which the number of unmatched bits exceeds the threshold value, the synchronization error data processing unit 31 does not judge that the synchronization pattern has been detected, and discards the subsequently received signal. The synchronization extraction processing unit 28 transmits a notice of the number of the unmatched bits. In this case, the synchronization error data processing unit 31 may also detect the matching level again.

The control data offset counter 33 receives the control data reception pulse and the number of bits of the payload of the control data from the extraction processing unit 29. The number of bits of the payload of the control data is loaded into the control data offset counter 33. Subsequently, the control data offset counter 33 performs a countdown using a supplied clock signal, and supplies the count value to the IQ data interval counter 32 as an offset value.

The IQ data interval counter 32 receives the IQ data reception completion pulse from the extraction processing unit 29, and receives the offset value from the control data offset counter 33. The IQ data interval counter 32 is preset to a predetermined value (= 369) by receiving the IQ data reception completion pulse, and performs a countdown using a supplied clock signal. Furthermore, in a case in which the IQ data interval counter 32 receives, from the control data offset counter 33, an offset value which is equal to or greater than 0, the offset value is loaded into the IQ data interval counter 32, and the IQ data interval counter 32 performs a countdown using a supplied clock signal. At the point in time when the count value reaches zero, the IQ data interval counter 32 transmits an instruction which indicates the timing of the next IQ data reception. In other words, the IQ data interval counter 32 offsets the estimated time intervals and indicates the offset time intervals of intermittently transmitted data from the RF-IC unit 3.

It is noted that the header correction unit 35 corresponds to the disclosed header correction means.

Description will be made regarding the operation of the present embodiment with reference to FIGs. 5A to 5D described above. As illustrated in FIG. 5A, it is assumed that the IQ data is transmitted via the reception path at constant intervals (e.g., 370 bits). It is noted that, in a case in which the control data interrupts at the timing when the IQ data is to be transmitted, as illustrated in FIG. 5B, IQ data is transmitted after waiting the equivalent of one bit after the transmission of the control data is complete.

At the point in time t1 at which reception of the previous IQ data has been completed, the IQ data interval counter 32 receives an IQ data reception completion pulse. As a result, the IQ data interval counter 32 is preset to a predetermined value (e.g., 369), and the IQ data interval counter 32 decrements the count value. It is noted that the point in time at which the count value reaches zero by decrementing the predetermined value (= 369) matches the constant interval (370 bits) which is an interval at which the IQ data is transmitted.

In a case in which interruption occurs due to the control data, as illustrated in FIG. 5B, the data length of the control data (32 in an example illustrated in the drawing) is extracted by header analysis, and the data length of the control data thus extracted is loaded into the control data offset counter 33 (point in time t2). Subsequently, the control data offset counter 33 decrements the count value.

As illustrated in FIG. 5C, at the point in time t3 at which the count value of the IQ data interval counter 32 reaches zero, the count value (32 in the example illustrated in the drawing) of the control data offset counter 33 illustrated in FIG. 5D is loaded into the IQ data interval counter 32.

Subsequently, the IQ data interval counter 32 starts to decrement the count value. The point in time t4 when the count value of the IQ data interval counter 32 reaches zero again is the start point in time at which the next IQ data is to be received.

It is noted that description has been made in the first and second embodiments regarding an arrangement in which the data received by the interface circuit is a signal stipulated in the DigRF standard. However, the present invention is not restricted to such an arrangement.

It is noted that the disclosed synchronization detection method can be realized by hardware components or software components.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

All examples and conditional language recited herein are intended for pedagogical purposes to aid the reader in understanding the invention and the concepts contributed by the inventor to furthering the art, and are to be construed as being without limitation to such specifically recited examples and condition, nor does the organization of such examples in the specification relate to a illustrating of superiority and inferiority of the invention. Although the embodiment of the present inventions have been described in detail, it is understood that the various changes, substitutions, and alternations could be made hereto without departing from the spirit and scope of the invention.

## Claims

1. An interface circuit for use in a baseband module, and receiving data from a radio frequency module intermittently, the data including a synchronization pattern followed by a payload data, the interface circuit comprising:
a receiver for receiving data transmitted from the radio frequency module;
a timer for indicating estimated time intervals of intermittently transmitted data from the radio frequency module; and
a processor for controlling detection of the synchronization pattern in portions of the received data included in a time window designated by the time intervals estimated by the timer, the processor validating detection of the synchronization pattern when at least a part of the data within the time window matches with a predetermined pattern and validating the payload data following the validated synchronization pattern.

2. The interface circuit according to claim 1, further comprising:
a detector for detecting the synchronization pattern in portions of the received data in accordance with matching the synchronization pattern with the predetermined pattern.

3. The interface circuit according to claim 1 or 2, wherein the receiver receives control data transmitted from the radio frequency; and further comprising:
a second timer for indicating offset of the estimated time intervals to the timer in accordance with the number of bits of a payload of the control data.

4. The interface circuit according to claim 3, wherein, when the second timer indicates the offset of the estimated time intervals to the timer, the timer offsets the estimated time intervals and indicates the offset time intervals of intermittently transmitted data from the radio frequency module.

5. The interface circuit according to any preceding claim, further comprising:
a header correction unit for selecting a header pattern which has a maximum number of bits that match the pattern of a header of the received data and replacing the header of the received data with the selected header pattern.

6. A method executing in a baseband module and for receiving data from a radio frequency module intermittently, the data including a synchronization pattern followed by a payload data, the method comprising:
receiving data transmitted from the radio frequency module;
indicating estimated time intervals of intermittently transmitted data from the radio frequency module;
controlling detection of the synchronization pattern in portions of the received data included in a time window designated by the estimated time; and
validating detection of the synchronization pattern and validating the payload data following the validated synchronization pattern, when at least a part of the data within the time window matches with a predetermined pattern.
